# EUROPEAN PATENT APPLICATION

(11) **EP 4 797 691 A1**
(43) Date of publication of application: **26.08.2026**
(21) Application number: 26160503.4
(22) Date of filing: 24.02.2026
(51) Int. Cl.: H04N 19/162, G06N 3/0455, H04N 19/167, H04N 19/17, H04N 19/90

(54) **IMAGE STREAMING METHOD AND SYSTEM**

(30) Priority: 25.02.2025 GB 202502702
(71) Applicant: Sony Interactive Entertainment Europe Limited, London W1F 7LP (GB)
(72) Inventor: CONDE, Marcos, London, W1F 7LP (GB)
(74) Representative: D Young & Co LLP

(57) **Abstract**

There is provided an image streaming method for streaming image content from a remote computing device to a client device. The method comprises receiving, from a remote computing device, one or more masked images, each masked image comprising a first image with one or more portions of the first image being masked, reconstructing the one or more first images from the one or more masked images using a Masked Auto Encoder, MAE, model, the MAE model being trained to reconstruct an image from a masked version of the image, and outputting the one or more reconstructed first images for display.

## Description

### BACKGROUND OF THE INVENTION

### Field of the invention

The present invention relates to an image streaming method and system for streaming image content from a remote computing device to a client device.

### Description of the Prior Art

Over time the streaming of video content has become more popular, at least in part due to technological advances which support this. For instance, high-speed internet has become more commonplace whilst ever more efficient video codecs are being developed. In this manner, content such as movies and television shows are able to be distributed on demand to users in an efficient and effective manner.

Rather than being limited to the streaming of pre-existing video content, it is also considered desirable for users to be able to stream video content corresponding to software being executed remotely. Cloud computing or cloud gaming arrangements may be preferable for a number of users in that more advanced processing hardware can be leveraged (for instance, at a server) without the user having to purchase that hardware directly. Such an advantage can lead to users on low-powered devices (such as mobile phones, handheld games consoles, or older computers) being able to access content for which they do not meet the basic processing requirements as long as they have an internet connection.

While there are significant advantages to cloud computing arrangements, there are also a number of limitations which can negatively impact the user experience. One such limitation is that of latency; in an arrangement which has high latency, the delay between a user's inputs and the implementation of these may be sufficient to cause input errors. Similarly, a user's performance may suffer in a game due to latency due to an increase in the time taken for them to respond to an event.

A number of arrangements have been implemented to reduce the latency associated with streaming content. One of these is the use of edge servers, which shorten the transmission path that content takes - thereby lowering the latency as it takes less time for communications to travel between the server and the client. However, there is still a desire for further latency reductions in content streaming arrangements.

The present invention seeks to at least partially mitigate or alleviate these problems.

### SUMMARY OF THE INVENTION

Various aspects and features of the present invention are defined in the appended claims and within the text of the accompanying description and include at least:
- In a first aspect, an image streaming method is provided in accordance with claim 1.
- In another aspect, an image streaming system is provided in accordance with claim 16.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an entertainment system;
- Figure 2 is a schematic flowchart illustrating an image streaming method;
- Figure 3 is a schematic flowchart illustrating operations performed by a Masked Auto-Encoder;
- Figure 4 illustrates example images processed by a Masked Auto-Encoder;
- Figure 5A schematically illustrates an image;
- Figure 5B schematically illustrates a partially masked image corresponding to the image of Figure 5A;
- Figure 6 schematically illustrates images used in the image streaming method of Figure 2; and
- Figure 7 schematically illustrates a further image streaming method.

### DESCRIPTION OF THE EMBODIMENTS

An image streaming method and system are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment system including an entertainment device (i.e. a client device) and a cloud server (i.e. a remote computing device).

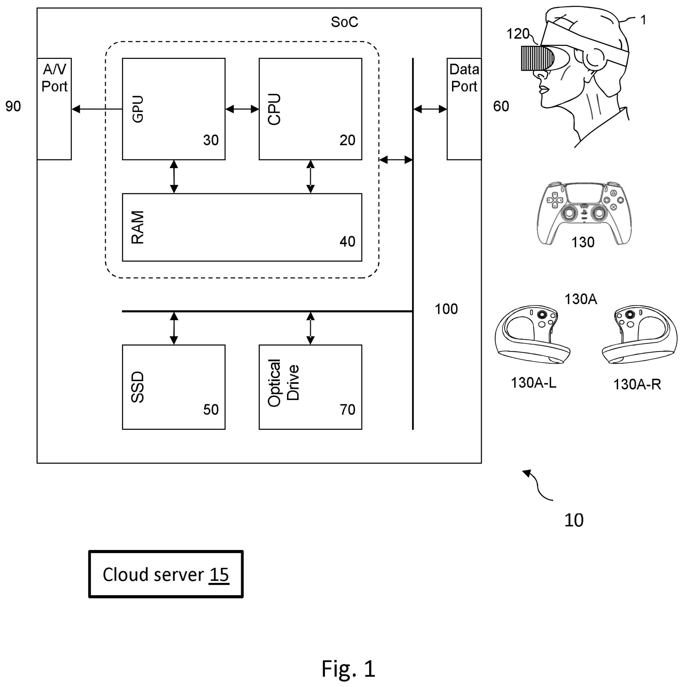

Referring now to the drawings, wherein like reference numerals designate identical or corresponding parts, Figure 1 shows an example of an entertainment system comprising an entertainment device 10 and a cloud server 15. The entertainment device 10 may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

In embodiments of the present disclosure, the entertainment device 10 generates one or more images of a virtual environment for display (e.g. via a television or the HMD 120).

Figure 1 therefore provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

In this example, a remote computing device is provided as part of a cloud server and/or service 15 accessible to the entertainment device 10 via an internet connection. The cloud server 15 may comprise one or more GPUs, and/or any other appropriate hardware components, for rendering images.

In an example embodiment of the present invention, the methods and techniques herein may at least partly be implemented using an autoencoder.

An autoencoder is a type of an unsupervised machine learning model that uses one or more artificial neural networks to learn an efficient representation of unlabelled input data. The autoencoder may be used to encode various types of data, such as images, video, text, or audio.

The autoencoder may comprise an encoder neural network that encodes input data into a reduced representation (also called a "latent space"), and a decoder neural network that aims to recreate the input data from the encoded reduced representation. The latent space is typically of a lower-dimension than the input data - thus, the latent space generated by the encoder typically provides a more efficient, compressed representation of the input data that requires less memory storage than the original input data.

The encoder neural network may comprise one or more layers that transform input data into a reduced representation. The encoder neural network receives input data, and the final layer of the encoder neural network outputs a reduced representation of the input data, i.e. a latent space (also termed a "bottleneck layer").

The decoder neural network may comprise one or more layers that transform data from the latent space into output data of the same dimensionality as the data input to the encoder. The decoder aims to reconstruct the data originally input to the encoder neural network from the latent space representation of the data.

The encoder and/or decoder neural networks typically comprise a plurality of hidden layers. For example, an encoder may comprise a plurality of hidden layers that progressively extract further reduced representations of the input data. Using deeper neural networks (i.e. with a higher number of hidden layers) for the encoder and/or the decoder may improve performance of the autoencoder, and in some cases may reduce the amount of training data that is required.

The encoder and decoder neural networks are typically trained together. During training the autoencoder may adjust its internal parameters (e.g. weights and biases of the encoder and decoder neural networks) so as to optimize (e.g. minimize) a loss/error function, aiming to minimize discrepancy between the data input to the encoder and the output reconstructed data generated by the decoder. It will be appreciated that the specific loss function, and algorithm used to optimize the function may vary depending on the nature of the autoencoder model, and its intended application. In an example, a mean squared error loss function optimized using gradient descent may be used. In some cases, a sparse autoencoder may be used in order to promote sparsity of the latent representation (as compared to the input) and to prevent the autoencoder from learning the identity function - for example, a sparse autoencoder may be implemented by modifying the loss function to include a sparsity regularization penalty.

Referring back to Figure 1, in a streaming scenario, the cloud server 15 may generate images that are then transmitted for display by the entertainment device 10. For example, the cloud server 15 may render images for a videogame and transmit the rendered images for display by, e.g., the HMD 120 of the entertainment device 10. In some cases, the entertainment device 10 may further transmit user inputs received by its peripheral devices (e.g. the handheld controllers 130 or 130A) to the cloud server 15, such that the cloud server 15 can generate images in dependence on the received user inputs.

Such a streaming arrangement advantageously allows moving the processing associated with generating content (e.g. videogame content) to the cloud server 15 and away from the entertainment device 10. By leveraging the typically greater computing resources at the cloud server 15, this allows providing more computationally-intensive content to users even if their devices lack computational power (e.g. even for users using mobile phones to interact with the content). However, streaming of images from the cloud server 15 to the entertainment device 10 can cause latency issues if the images are delayed in reaching the entertainment device 10. These issues can be particularly pronounced for high quality (e.g. 4K and/or virtual reality) image content, making it difficult for users to interact with such content.

Embodiments of the present disclosure relate to approaches for lowering the latency when streaming images from a remote computing device (e.g. cloud server 15) to a client device (e.g. entertainment device 10), in particular in low-bandwidth scenarios. In the present disclosure, the remote computing device transmits partially masked images (e.g. with 90% of the pixels being masked) to the client device, which client device reconstructs the original (i.e. 'unmasked') images from (i.e. based on) the masked images using a Masked Auto Encoder (MAE) model that is trained to reconstruct an image from a partially masked image. The client device then outputs the reconstructed images for display (e.g. to the HMD 120 of the entertainment device). In this way, the present approach provides improved balance between latency and quality of the images output at the client. By streaming images that are partially masked, as opposed to the full images, the amount of data being streamed to the client is reduced, thus lowering latency and making the streaming of images more resilient to changes in bandwidth. At the same time, by reconstructing the images at the client device using the MAE model, the present approach allows efficiently recovering information in the image and providing high quality images for display to the user. The present approach achieves this by counter-intuitively intentionally masking (i.e. corrupting) the images before transmission to reduce the bandwidth required for transmitting the images to the client device.

The present approach provides a very high recovery rate of information at the client device, allowing the majority (e.g. 90%) of the streamed images to be masked, whilst still reconstructing images with sufficient accuracy. This contrasts with existing super-resolution-based approaches, which include downsampling an image at the server side, and upsampling the image using super-resolution techniques at the client side; in which super-resolution approaches the ratio of transmitted data to displayed data typically needs to be much higher (e.g. 2:1, as opposed to 10:1 as in the 90% masked MAE example) in order to avoid artefacts in the upsampled images. In addition, processing of images using the MAE model can be more efficient than many high-performance super-resolution machine learning models thus reducing the inference time at the client-side. Thus, it will be appreciated that the present approach is able to better balance the contrasting requirements of low latency and high quality of images in streaming scenarios, than existing super-resolution based techniques.

The present disclosure is particularly applicable to streaming interactive content, such as videogames, where the reduced latency provided by the present approach is particularly advantageous. However, the present disclosure is also beneficial for streaming other content. For example, when streaming live content (e.g. live sports or entertainment video), the reduced latency provided by the present approach allows providing the content with reduced delay and with reduced risk of lag or other latency-caused artefacts in the content. Similarly, even for static content such as movie streaming, by reducing the amount of data that needs to be streamed from the cloud to the client, the present approach improves the efficiency of the streaming and allows reducing the size of the buffer used for storing content at the client as the content is being streamed.

It will be appreciated that as used herein the term "masking" relates to removing information from an image. For example, masking a portion of an image relates to removing information associated with the masked portion from the image, e.g. by setting elements of the image corresponding to the masked portion to zero or a constant value (e.g. indicating a grey colour). The masking process thus results in an incomplete version of the image being created, which incomplete information requires less data to store and/or transmit than the full image.

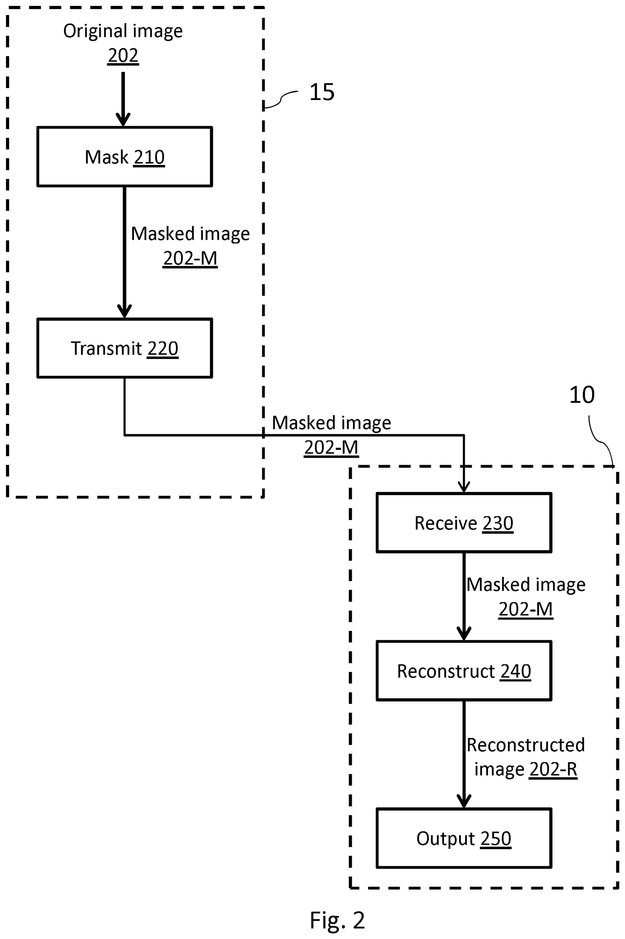

Figure 2 shows an example of an image streaming method in accordance with one or more embodiments of the present disclosure.

One or more steps of the image streaming method of the present disclosure may be performed by a remote computing device, and one or more steps may be performed by a client device. In the example of Figure 2, steps 210, 220 are performed by the cloud server 15 (which acts as an example of a remote computing device, the two terms being used interchangeably below), and steps 230, 240, 250 are performed by the entertainment device 10 (which acts as an example of a client device, the two terms being used interchangeably below).

For ease of illustration, the example of Figure 2 shows the image processing method in relation to a single image. However, it will be appreciated that the techniques described herein may be applied to a plurality of images, such as a plurality of image frames for content (e.g. a videogame).

The image processing method of Figure 2 comprises generating 210 a masked version 202-M of an image 202, transmitting 220 the masked image 202-M from the cloud server 15 to the entertainment device 10, receiving said masked image 202-M at the entertainment device 10, generating a reconstructed image 202-R based on the masked image 202-M using a MAE model, and outputting the reconstructed image 202-R for display to a user.

Considering the steps performed in method of Figure 2 in more detail:
A step 210 comprises generating a masked (first) image 202-M for content. The masked image 202-M is a partially masked version of a (first) original (i.e. unmasked) image 202. The image 202 may comprise any type of image such as a captured image, or a computer-generated (e.g. rendered) image.

The image 202 may be an image frame for content. A plurality of image frames for content may be provided to the user in real-time using the techniques described with reference to Figure 2.

In the example of Figure 2, generating the masked image 202-M comprises processing the original (i.e. unmasked) image 202 to mask one or more portions thereof. In other words, masking is applied as a post-processing step to a generated image 202 to obtain a partially masked image 202-M.

Generating the masked image 202-M in this way advantageously allows seamless integration of the present techniques with existing streaming pipelines which already generate (e.g. render) the original image 202 for streaming to the client device. Thus, the only modification required at the server (e.g. cloud) side is to process the generated original image 202 to partially mask it, which masked image 202-M can then be transmitted to the client as discussed in relation to step 220 below.

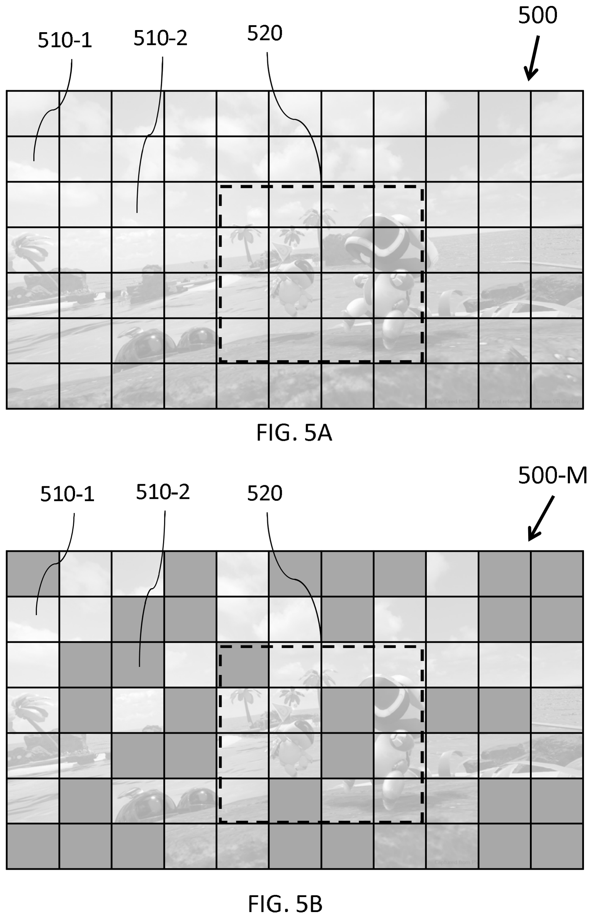

Masking one or more portions of the image 202 may comprise setting the values of pixels (or voxels for a 3D image) corresponding to the masked portions to zero or a constant value. The masked portions may each comprise one or more elements (e.g. pixels or voxels) of the image 202. The masked portions may each be of the same size and/or dimensions (e.g. 5x5 pixels in the width x height directions), or may vary in size and/or dimensions. Each masked portion may comprise a single pixel of the image 202. Alternatively, each masked portion may comprise a patch of pixels in the image 202. Each patch may be of any suitable shape, such as rectangular, or square, and may comprise a plurality of pixels of the image 202. For example, each patch of pixels may have dimensions of 2x2, 4x4, 8x8, 8x4, or 16x16 pixels in the width x height dimensions. Masking the image 202 in patches, as opposed to individual elements, can improve the efficiency of the masking process and improve performance of reconstruction by the MAE model. An example image divided into patches, some of which patches are masked, is shown in Figure 5.

The selection of image portions of the image 102 for masking may be performed in a random and/or uniform manner.

One or more portions of the image 202 may be masked in a random manner. In other words, masked portions may be randomly distributed across the masked image 202-M. For example, one or more probabilities of masking (e.g. 50%, 75%, or 90%) may be assigned to one or more parts of the image 202, and a given image portion may be masked based on the evaluation of a random function with the masking probability for the associated image part. For instance, a higher masking probability may be assigned to some image parts (e.g. image parts depicting background) and a lower masking probability may be assigned to other image parts (e.g. image parts depicting objects, such as characters, in the image). Alternatively, a uniform masking probability may be used across the image 202.

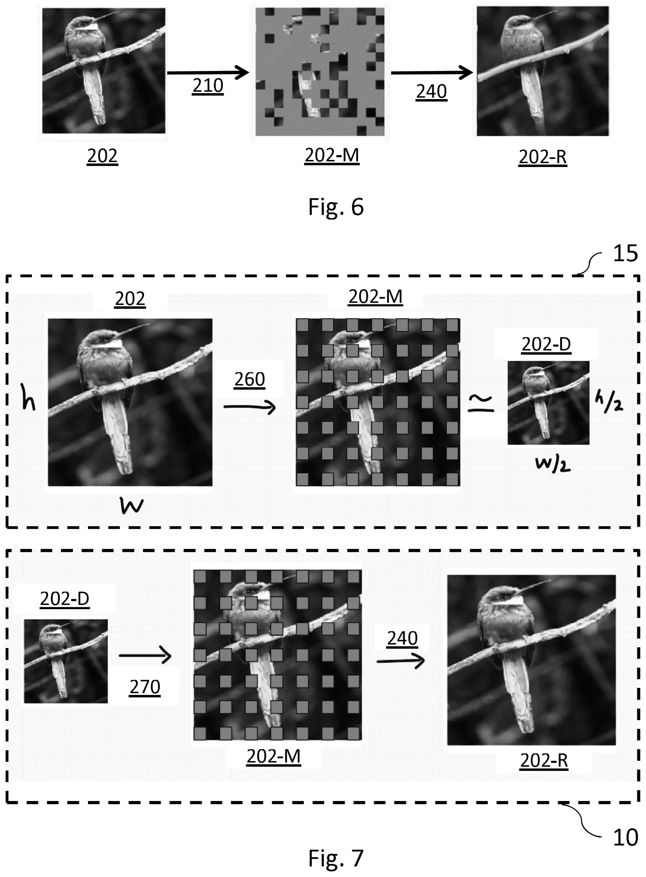

Alternatively, or in addition, one or more portions of the image 202 may be masked in a uniform manner. In other words, masked portions may be uniformly distributed across the masked image 202-M. For example, for every N consecutive pixels in the image 202, M pixels may be masked. For example, alternating, i.e. N = 2, M = 1, pixels may be masked, or every 3 in 4 pixels may be masked, i.e. N = 4, M = 3. As discussed in further detail with reference to Figure 7, a uniform masking distribution can allow yet further improved integration with existing streaming pipelines as uniform masking is particularly compatible with streaming pipelines utilising downsampling at the server side. As for random masking, in uniform masking a different masking ratio may be assigned to different parts of the image 202.

In some cases, a first part of the image 202 may be masked randomly, and a second part of the image 202 may be masked uniformly.

Masking the image 202 at step 210 may comprise determining a masking ratio for the image 202 (i.e. what proportion of the image 202 to mask). One or more different masking ratios may be used for different parts of the image 202. The masking ratio may then be used to randomly and/or unfirmly mask portions of the image 202. In random masking, the masking ratio may define the probability that a given image portion or element thereof (e.g. pixel) is masked.

In examples of the present disclosure, the masking ratio may be at least 0.5, at least 0.7, or at least 0.9 (i.e. 90% of the image 202 being masked). For example, the masking ratio may be 0.5, 0.6, 0.7, 0.75, 0.8, 0.85, or 0.9. It will be appreciated that increasing the masking ratio reduces the amount of data that needs to be transmitted between the cloud server 15 and the entertainment device 10, but may reduce the quality of the reconstructed images at the client side. For instance, excessive masking of the image 202 may result in artefacts in the reconstructed image 202-R.

The masking ratio may be predetermined, for example on the basis of empirical testing of the quality of reconstructed images (with regards to both quality of individual images and latency) for varying masking ratios. For example, for a plurality of masking ratios and a plurality of images 202, an empirically determined cost function relating to the latency and quality (e.g. perceived quality by the user, as determined using a suitable function) may be assessed and an optimal masking ratio may be selected.

Alternatively, or in addition, the masking ratio may be updated in real-time in dependence on the current streaming context. This advantageously allows the present approach to better react to changing streaming circumstances (e.g. changing bandwidth between the cloud server 15 and entertainment system 10), thus improving the quality of images output to the user at the client side. The masking ratio may be determined in dependence on one or more properties of the cloud server 15 (i.e. server) and/or entertainment device 10 (i.e. client), and/or in dependence on communication properties between the cloud server 15 and entertainment device 10. For example, the masking ratio may be determined in dependence on one or more of: a frame rate for images 202 transmitted from the cloud server 15 to the entertainment device 10, bandwidth for communication between the cloud server 15 and the entertainment device 10, and/or the computational load on the entertainment device 10. The masking ratio may be determined based on an empirically determined function based on these requirements (i.e. frame rate, bandwidth, and computational load on the client).

Considering the frame rate, the masking ratio may be increased with increasing frame rate for transmitting the images 202 from the server to the client. This helps reduce latency at the client side, as increasing masking reduces the amount of data that is transmitted per frame, thus compensating for the increased number of frames per unit time (e.g. second). In this way, excessive variations in the streaming bitrate across different frame rates may be prevented. The change to the masking ratio for a given change in frame rate may be determined based on an empirically determined function for mapping between frames rates and masking ratios. For example, for a first frame rate of 60 frames per second (fps), the masking ratio may be 0.7, and upon an increase to the frame rate to 120 fps, the masking ratio may be increased to 0.9.

Considering bandwidth, the masking ratio may be increased with reducing bandwidth for communication between the server and client. In this way, the present arrangement can adapt to changing network conditions and maintain a low latency of the images delivered to the user. For example, when the bandwidth changes from 100 MBps to 50 MBps, the masking ratio may be increased from 0.5 to 0.9 to reduce the amount of data that needs to be transmitted for each image 202, e.g. for each image frame for content (such as a videogame). Conversely, when the bandwidth increases, e.g. due to reduced load on the network, the masking ratio may be reduced to improve the quality of images reconstructed by the client device.

Considering computational load on the client, this load may include processing and/or memory load on the client device, such as CPU, or GPU usage, or memory access times or usage. In some cases (e.g. where the encoder of the MAE model is arranged at the client and the encoder is responsible for a significant proportion of the computational costs at the client), the masking ratio may be increased with increasing computational load on the client. A higher masking ratio can reduce the processing and memory cost of reconstructing the image 202-R using the MAE model as it reduces the amount of data input to the encoder of the MAE model. Alternatively, in other cases (e.g. where the decoder of the MAE model is arranged at the client and has a high associated computational cost), the masking ratio may be decreased with increasing computational load on the client, in order to simplify the decoding process.

Adaptively modifying the masking ratio based on the streaming parameters in this way allows the present approach to make optimal use of the current streaming context, preventing excessive latency (by increasing the masking ratio when needed) while providing higher quality output images (by reducing the masking ratio) when network and/or computational conditions permit.

The masking of the original image 202 at step 210 may comprise selecting one or more portions of the image 202 for masking in dependence on saliency of the portions to the user of the client device. Less salient portions of the image may be masked to a greater extent than more salient portions. This allows improved reconstruction of the more salient portions thus improving the perceived quality of the reconstructed image 202-R to the user for a given overall masking ratio. The saliency of image portions may, for example, be determined based on one or more of: objects associated with (i.e. shown in) the image portions, game context data for the image portions, a gaze direction of a user of the entertainment system 10 (e.g. as determined using the HMD 120), and/or position of the image portions within the image 202.

Considering game context data, the image 202 may be an image for a videogame played by the user of the entertainment system 10. Game context data may comprise data relating to the relevance of different objects in the image 202 to the videogame being played. For example, game context data may be used to determine which object shown in the image 102 the user is mostly likely to pay attention to (e.g. such as the character controlled by the user, or a character the user is currently fighting), or the direction the user is likely to move in in the virtual environment (e.g. based on current objectives within the game). Corresponding image portions in the image 102 may then be identified and a lower masking ratio may be used for these portions than for other portions. For example, a lower masking ratio may be used for portions (e.g. patches) of the image 102 corresponding to more salient characters (e.g. the enemy boss being fought by the user) than for image portions corresponding to less salient characters (e.g. the user's allied characters). It will be appreciated that game context data may provide a wide range of indicators of the relevance of image portions. For instance, game context data may indicate which character is speaking to the user in a role-playing game (RPG); and image portions associated with the speaking character may be masked to a lower degree.

Considering gaze data, for example, a lower masking ratio may be used for image portions corresponding to the user's gaze location. Taking the user's gaze into account allows the present approach to assess saliency of image portions in a more personalised and real-time manner, and improving the perceived quality of the reconstructed image 202-R at the client.

Considering position within the image, reduced masking may be used for central portions of the image 102, and increased masking may be used for peripheral portions of the image 102. Determining saliency based on position may provide a computationally cheaper substitute for gaze-based saliency, e.g. in cases where gaze data is not available.

Selecting portions of the image 202 for masking may comprise selecting specific portions (e.g. pixels) of the image 202 to mask. For instance, specific pixels corresponding to the scenery (e.g. as determined based on game context data) may be masked. Alternatively, or in addition, selecting portions of the image 202 for masking may comprise setting one or more different masking ratios for different parts of the image 202. For instance, a higher masking ratio may be set for image parts determined to be less salient than for more salient image parts, with saliency e.g. determined based on the user's gaze.

Referring to Figures 5A and 5B, these figures illustrate an example original image 500 and a corresponding masked image 500-M, masked using the techniques described herein. In this example, the image 500 is an image for a videogame.

As shown in Figure 5A, the image 500 is divided into a plurality of patches 510. In Figures 5A and 5B, the patches 510 are depicted as a grid, and include patches 510-1 and 510-2. In addition, a part 520 of the image 500 is determined to be of greater saliency, e.g. in dependence on the user' gaze position being co-located with the image part 520, and/or the part 520 depicting in-game characters that are determined to be of relevance to the user.

Figure 5B depicts the corresponding masked image 500-M. Patch 510-1 is not masked, and patch 510-2 is masked. In the example of Figure 5B, the masked patches 510 are randomly distributed in the image 500-M. Further, different masking ratios are used for the salient part 520 of the image 500 than for the remainder of the image 500. In this illustrative example, a masking ratio of 0.5 is used for the remainder of the image 500, and a masking ratio of 0.25 is used for the salient part 520 of the image.

In Figures 5A and 5B, the patches are large and masking ratios are relatively low for illustrative purposes. However, it will be appreciated that in practice the patches may be substantially smaller (e.g. of the order of 2 to 100 pixels in each dimension) and masking ratios may be substantially higher (e.g. 0.9 for the remainder of the image and 0.7 for the salient part of the image).

Referring back to Figure 2, as discussed above, in the example of Figure 2 masking is performed as a post-processing step on an image 102, to generate a masked image 102-M.

In an alternative example, masking may be integrated into the image generation process (e.g. into the image rendering pipeline). For example, generating the masked image 102-M may comprise selecting the portions of the image 102 to mask before or during the generating of the image 102, and fully generating only the unmasked portions of the image 102 to obtain the masked image 102-M. This allows further improving the efficiency of the present streaming approach as it reduces the computational costs of generating the masked image 102-M by removing the need to generate (e.g. render) parts of the image that are then masked. In this way, the cloud server 15 can generate the masked images 102-M more efficiently and more quickly, thus also further reducing latency.

Considering an example in which the image 102 is generated by rendering the image 102, the alternative example may be implemented as follows. One or more portions of the image 102 may be selected for masking before generating the image 102, for example the masked portions may be selected in a random manner based on a predetermined masking ratio, and/or in dependence on a gaze position of the user as described herein. Subsequently, at least part of the rendering operations may be omitted for the masked portions, and only unmasked portions of the image 102 may be rendered in full, thus generating the masked image 102-M. Omitting at least part of the rendering operations is made possible as the masked portions are not transmitted to the client and thus do not need to be rendered in full, e.g. the final pixel values of the masked portions may not be calculated. For example, for the masked portions, at least part of shading (e.g. at least part of fragment shading, and/or lighting operations), and/or rasterization may be omitted. Different masked portions may be rendered to different extents, depending on how relevant the masked portions are to the rendering of the unmasked portions.

In some cases (i.e. for some masked portions), part of the rendering operations for the masked portions may be performed, to the extent these operations are required to render the unmasked portions (e.g. to the extent the geometry or lighting in the masked portions affects lighting in the unmasked portions). This may for example apply in cases where a masked portion forms part of the same virtual environment as an unmasked portion and thus the rendering of the masked portion may at least partly affect the rendering of the unmasked portion, e.g. as a result of lighting in the masked portion affecting the lighting in the unmasked portion.

In some cases, rendering operations for the masked portions may be simplified to reduce the computational cost of rendering the masked portions. For example, a less computationally intensive shading algorithm may be used for the masked portions than for the unmasked portions. This advantageously allows still rendering the masked portions to account for their interactions (e.g. via lighting) with the unmasked portions, but doing so in a more efficient manner.

In other cases, where rendering of the unmasked portions is less dependent (or independent) of the rendering of a masked portion, no rendering operations at all may be performed for the masked portion, thus providing further improved efficiency. This may for example apply in cases where the masked portion is an overlay (e.g. in-game menu in a videogame) that does not interact (e.g. via lighting or otherwise) with neighbouring unmasked portions; and/or in cases where the masked portion is part of the background scenery (see e.g. top two rows of patches 510 in the image 500 of Figure 5A).

As discussed herein, a high proportion (e.g. 90%) of pixels of the image 102 may be masked. Thus, it will be appreciated that at least partially omitting rendering operations for the masked pixels can provide significant improvements in efficiency of the image generation and the present image streaming method more generally.

In some cases, the example of Figure 2 and the alternative example described above can be used in combination. For example, a first part of the image 102 may be generated and subsequently portions of the first part may be masked, and for a second part of the image 102 the masking may be integrated into the process of generating the second part such that only unmasked portions of the second part are generated.

As discussed herein, the present techniques are particularly applicable to live streaming, for example for cloud gaming. In some cases, step 210 may comprise generating (e.g. rendering) the masked image 202-M in dependence on one or more user inputs received from a peripheral device (e.g. controller 130) operated by the user of the entertainment system 10. The user inputs may be processed by the entertainment system 10 and/or by the cloud server 15. The user inputs may be fed into a games engine which engine may determine the image 202 to generate for display to the user based on the user inputs.

Referring back to Figure 2, a step 220 comprises transmitting the masked image 202-M generated at step 210 from the cloud server 15 to the entertainment device 10.

The masked image 202-M may for example be transmitted via an internet connection. It will be appreciated that the masked image 202-M may be encoded prior to transmission, e.g. using a suitable codec.

The masked image 202-M transmitted at step 220 may comprise the masked image 202-M itself (typically encoded using an image transmission codec).

Alternatively, as discussed in further detail below, prior to transmission, the masked image 202-M may be processed using the encoder of the MAE model, such that a latent space representation of the masked image 202-M is transmitted to the entertainment device 10 for decoding by the decoder of the MAE model arranged at the entertainment device 10. Distributing the MAE model across the cloud server 15 (i.e. remote computing device) and the entertainment device 10 (i.e. client device) in this way advantageously allows further reducing latency of the present streaming approach as the latent space representation is more compact than the masked image 202-M and so the amount of data transmitted between server and client is reduced.

A step 230 comprises receiving, at the entertainment device 10, the masked image 202-M transmitted by the cloud server 15 at step 220.

As for step 220, step 230 may comprise decoding the masked image 202-M using a suitable codec.

A step 240 comprises reconstructing the image from the masked image 202-M received at step 230, to obtain the reconstructed image 202-R. Step 240 is performed by the entertainment device 10.

The reconstruction of the image at step 240 is performed using the MAE model. The MAE model is an autoencoder, and may be implemented and trained using the techniques described herein in relation to autoencoders. The MAE model is trained to reconstruct an image from a partially masked image by predicting the missing (i.e. masked) portions of the image. MAE models are particularly well suited to this task as these models are able to learn an efficient latent space representation of a partially corrupted/masked input to recover information in the input. By leveraging the information-recovery capabilities of the MAE model, the present approach allows significantly reducing the bandwidth required for streaming images and thus latency. For instance, the MAE model may be able to recover a full image 202 with sufficient accuracy (i.e. with sufficiently small differences between the reconstructed image 202-R and the original image 202), even when 90% of the image pixels are masked.

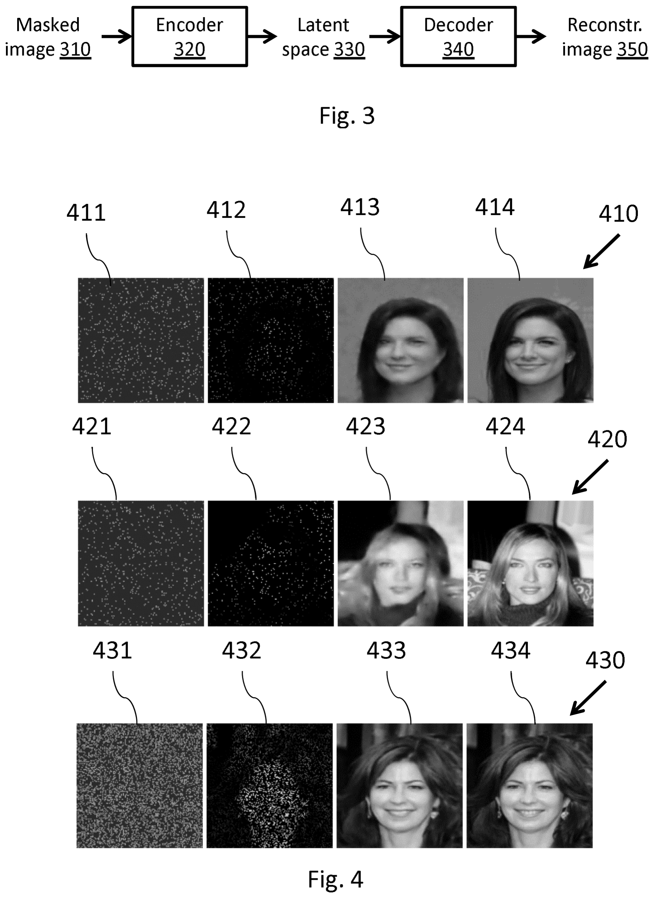

Referring to Figure 3, an example architecture of the MAE model is shown. The MAE model comprises an encoder 320 and a decoder 340.

The encoder 320 receives a masked image 310 (e.g. the masked image 202-M). The encoder 320 then processes the masked image 310 to output a reduced representation 330 of the input masked image 310. The reduced representation 330 of the input may be referred to as a latent space representation 330.

The encoder 320 may comprise one or more neural networks. For example, the encoder 320 may comprise one or more convolutional layers that capture spatial features in the input masked image 310, and one or more fully connected layers that compress the data into a lower-dimensional latent space. The encoder 320 may use one or more non-linear activation functions to learn more complex patterns in the input masked image 310.

The latent space representation 330 output by the encoder 320 is a compressed representation of the input masked image 310, which typically has a lower-dimensionality than the input masked image 310. The latent space representation 330 aims to capture the most important features of the input masked image 310 while discarding redundant information.

The latent space representation 330 is then input to the decoder 340. The decoder 340 reconstructs the original (i.e. unmasked) image corresponding to the masked image 310 from the latent space representation 330. Unlike conventional decoder of an autoencoders, the MAE decoder 340 aims to reconstruct the full, unmasked, version of the image.

The decoder 340 may have a structure mirroring that of the encoder 320. The decoder 340 may comprise one or more neural networks. For example, the decoder 340 may comprise one or more deconvolutional layers that reverse the convolutional operations performed by the encoder 310, and one or more fully connected layers that increase the dimensionality of the latent representation to the original image dimensions. Like the encoder 320, the decoder 340 may use one or more non-linear activation functions to reconstruct more complex patterns in the image.

The decoder 340 outputs a reconstructed image 350 which is a fully reconstructed version of the masked image 310, with masked portions being filled with image data.

The MAE model therefore aims to learn a robust latent representation 330 that captures the underlying structure of the input masked image 310, despite parts of the input image being missing (i.e. masked), such that the original, unmasked, image can be reconstructed by the MAE decoder 340.

The encoder 320 and decoder 340 may be trained together. During training the MAE model may adjust its internal parameters (e.g. weights and biases of the encoder and decoder neural networks) so as to optimize (e.g. minimize) a reconstruction error, aiming to minimize discrepancy between the original (unmasked) image input to the encoder 320 and the reconstructed image 350 output by the decoder 340. The reconstruction error may be calculated using any suitable loss function, such as mean squared error (MSE).

In an example, both the encoder 320 and the decoder 340 of the MAE model may be arranged on the client side, such as at the entertainment device 10. In this example, the remote computing device transmits image data for the masked image 310, 202-M to the client device. The client device subsequently processes the image data for the masked image 310 using both the encoder 320 and the decoder 340 of the MAE model to obtain the reconstructed image 340, 202-R. This arrangement advantageously allows more seamless integration with existing streaming servers as it allows the remote server to simply stream image data, e.g. using an existing image codec. All MAE operations are in turn performed on the client device, thus minimising complexity on the server side.

In an alternative example, the encoder 320 and the decoder 340 of the MAE model may be distributed between the server and client. The MAE encoder 320 may be arranged at the server side (i.e. at the remote computing device, such as cloud server 15), and the MAE decoder 340 may be arranged at the client side (i.e. at the client device, such as the entertainment device 10). On the server side, the MAE encoder 320 may receive the masked image 310, 202-M and output a reduced latent representation 330 of the masked image. The latent representation 330 may then be transmitted from the server to the client, and subsequently decoded at the client using the MAE decoder 340 to obtain the reconstructed image 350, 202-R. This distributed MAE model arrangement can allow further reducing latency in image streaming as the latent representation 330 can require less data to transmit than the image data for masked image 310, 202-M.

It will be appreciated that different MAE models may be used depending on properties of the images being streamed, and/or depending on the masking approach implemented at step 210. Relevant image properties may for example include one or more of: quality (e.g. resolution), frame rate, and/or motion of objects in the images. Relevant aspects of the masking approach may for example include one or more of: the masking ratio, and/or masking distribution (e.g. uniform or random). For example, a different MAE model may be used for 4K images than for 1080x720p images; a different MAE model may be used when random masking is used than when uniform masking is used; and/or different MAE models may be used for different masking ratios. Each MAE model may be trained for the particular case, e.g. for a particular masking approach.

In some cases, the appropriate MAE model to use for reconstructing the unmasked image may be adaptively selected in real-time during the streaming of image data from the server to the client. For example, the cloud server 15 may monitor and detect (e.g. at regular intervals, or upon a trigger) the properties of the images 202 currently transmitted to the entertainment device 10 and/or the current masking approach, and select a MAE model from a plurality of MAE models based on the detected image properties and/or masking approach. The cloud server 15 may then transmit the selected MAE model (e.g. the decoder 340 only, or the encoder 320 and the decoder 340 depending on whether image data or latent space data is transmitted for the masked image) to the entertainment device 10 for use in reconstructing images. Transmitting the selected MAE model may comprise transmitting the trained MAE model (e.g. the weights and biases thereof) for use in inference. This allows further improving the quality of the images reconstructed at the client side, by ensuring that the most appropriate MAE model for the currently transmitted images is being used to reconstruct the images.

Referring back to Figure 2, a step 250 comprises outputting, by the entertainment device 10 (i.e. client device), the reconstructed image 202-R, output by the MAE model at step 240, for display to a user.

Outputting the reconstructed image 202-R may comprise transmitting the image 202-R for display by a further display device. The reconstructed image 202-R may be displayed to a user of the entertainment device, e.g. using the HMD 120.

Referring to Figure 6, an example image 202 processed using the method of Figure 2 is shown. The original image 202 is processed 210 to generate the partially masked image 202-M. The masked image 202-M is then input to the MAE model which reconstructs 240 the image 202 to obtain the reconstructed image 202-R. As shown in Figures 4, the reconstructed image 202-R closely resembles the original image 202. At the same time, less bandwidth is required to generate the reconstructed image 202-R using the techniques described herein, than if the original image 202 was directly transmitted to the entertainment device 10. The present MAE-based streaming techniques therefore provide an improved balance between output image quality and latency, particularly in low-bandwidth streaming scenarios, where low bandwidth is a bottleneck in communication.

Referring to Figure 4, further examples of sets 410, 420, 430 of images generated using the image streaming method discussed herein are shown. Each set 410, 420, 430 of images comprises from left to right: an image of the masked pixels 411, 421, 431; a visualisation of the masked image (where black pixels are masked) 412, 422, 432; the reconstructed image 413, 423, 433; and the original (unmasked) image 414, 424, 434. The original images 414, 424, 434 correspond to the original image 202. The reconstructed images 413, 423, 433 correspond to the reconstructed image 202-R. The masked images 412, 422, 432 correspond to the masked image 202-M.

As shown in Figure 4, despite the masking of a significant proportion of pixels in the masked images 412, 422, 432, the MAE model is able to accurately reconstruct the masked pixels such that the reconstructed images 413, 423, 433 closely resemble the original images 414, 424, 434.

In the example of Figure 2, masking of the image 202 is performed at the remote computing device, e.g. by the cloud server 15, and a masked image 202-M is transmitted to the client device (e.g. entertainment device 10).

Referring to Figure 7, an alternative example image streaming method in accordance with embodiments of the present disclosure is shown.

In the example of Figure 7, rather than masking the image 202, the cloud server 15 (i.e. remote computing device) downsamples 260 the image 202 and transmits the downsampled image 202-D to the entertainment device 10 (i.e. client device). As shown in Figure 7, uniform masking of the image 202 using a given masking ratio to obtain a masked image 202-M can be considered equivalent to downsampling 260 of the image 202 by a downsampling factor corresponding to the masking ratio. For example, as shown in Figure 7, masking the image 202 using a masking ratio of 0.75 (i.e. masking 3 in every 4 pixels) can be considered equivalent to downsampling each of the height (h) and width (w) dimensions by a factor of 2. The masking and downsampling operations are equivalent in the sense that data for the same pixels is removed in each case, except that in masking certain pixels are masked whereas in downsampling certain pixels are removed altogether. Thus, the downsampling and masking provide the equivalent compression of information, where a similar amount of data is required to transmit the downsampled image 202-D as the masked image 202-M.

At the client side, the entertainment device 10 upsamples 270 the downsampled image 202-D by adding masked portions to the downsampled image 202-D. In other words, the entertainment device 10 increases the spatial resolution of the downsampled image 202-D back to the spatial resolution of the original image 202, and fills in new pixels as the masked portions. As opposed to interpolating the new pixels as in typical upsampling approaches, the entertainment device 10 simply masks the new pixels. In this way, the entertainment device generates the masked image 202-M. The reconstructed image 202-R is then generated based on the masked image 202-M using the same techniques as those described with reference to Figure 2.

Thus, like the image streaming method of Figure 2, the image streaming method of Figure 7 allows reducing the amount of data that needs to be transmitted from the cloud server 15 to the entertainment device 10 and thus provides reduced latency. In addition, the image streaming method of Figure 7 provides further improved integration with existing streaming pipelines as the cloud server 15 can simply transmit downsampled images with the MAE-specific masking and encoding-decoding using the MAE all being performed on the client. In this way, the image streaming method of Figure 7 allows seamless integration with existing server-side streaming pipelines.

In some cases, the MAE-based reconstruction approach described herein may be triggered only if the bandwidth availability is below a predetermined threshold. In such cases, by default, the original image 202 may be transmitted from the remote computing device to the client device, and only upon detection of bandwidth availability being below a threshold (and/or latency being above a threshold), the masked image 202-M may be transmitted instead for reconstruction by the client device.

It will be appreciated that the techniques described herein can be applied to any type of images, such as 2D or 3D images. The present techniques may be particularly applicable to virtual reality (VR) or augmented reality (AR) applications, where low latency is particularly desirable.

Referring back to Figure 2, in a summary embodiment of the present invention an image streaming method for streaming image content (i.e. images) from a remote computing device 15 to a client device 10 comprises the following steps.

A step 230 comprises receiving, from a remote computing device 15 (and at the client device 10), one or more (partially) masked images, each masked image comprising a first image with one or more portions (e.g. patches) of the first image being masked, as described elsewhere herein.

A step 240 comprises reconstructing (at the client device 10) the one or more first images from (i.e. based on) the one or more masked images using a Masked Auto Encoder, MAE, model, the MAE model being trained to reconstruct an image from a (partially) masked version of the image, as described elsewhere herein.

A step 250 comprises outputting (at the client device) the one or more reconstructed first images for display (to a user), as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the one or more masked images comprise a plurality of masked image frames for content; and reconstructing the one or more first images from the one or more masked images comprises reconstructing a plurality of image frames from the masked image frames in real-time for display to a user, as described elsewhere herein;
- the MAE model comprises: an encoder configured to encode the one or more masked images into a latent space representation, and a decoder configured to decode the latent space of the one or more masked images to reconstruct the one or more first images, as described elsewhere herein;
- receiving 230 the one or more masked images comprises receiving the latent space representation of the masked images; and reconstructing 240 the one or more first images comprises decoding, using the MAE model decoder, the latent space representation of the one or more masked images to reconstruct the one or more first images (i.e. the MAE encoder is arranged at the remote computing device and the MAE decoder is arranged at the client device, and receiving 230 the one or more masked images comprises receiving the encoded one or more masked images) , as described elsewhere herein;
- receiving 230 the one or more masked images comprises receiving image data for the one or more masked images; and reconstructing 240 the one or more first images comprises: encoding, using the MAE encoder, the image data for the one or more masked images into a latent space representation; and decoding, using the MAE model decoder, the latent space representation of the one or more masked images to reconstruct the one or more first images (i.e. the MAE encoder and the MAE decoder are both arranged at the client device), as described elsewhere herein;
- reconstructing 240 the one or more first images from the one or more masked images comprises filling in image data for the one or more masked portions, to reconstruct the image data in the corresponding portions of the first images, as described elsewhere herein;
- the method further comprises generating 210, at the remote computing device, the one or more masked images; and transmitting 220, from the remote computing device to the client device, the one or more masked images, as described elsewhere herein;
   - in this case, optionally generating the one or more masked images comprises: generating the one or more first images, and processing the one or more first images to mask one or more portions of the first images, as described elsewhere herein;
   - in this case, optionally generating the one or more masked images comprises: selecting the one or more portions of the first images for masking, rendering the unmasked portions of the first images, and at least partly omitting rendering operations for the masked portions of the first images, as described elsewhere herein;
   - in this case, optionally the method further comprises: receiving one or more user inputs from a peripheral device operated by a user of the client device; and generating, at the remote computing device, the one or more masked images based on the user inputs, as described elsewhere herein;
   - generating the masked images comprises selecting the one or more portions of the first images for masking, where the one or more portions are selected in dependence on one or more of: a gaze direction of a user of the client device; game context data, from a videogame engine, for portions of the first images (where the images are images for the videogame); and an object associated with the image portion, as described elsewhere herein;
   - in this case, optionally selecting the one or more portions of the first images for masking comprises setting one or more masking ratios for one or more image portions of the first images in dependence on one or more of: the gaze direction, and the game context data, as described elsewhere herein;
   - generating the masked images comprises determining a masking ratio for the first images in dependence on one or more of: a frame rate for the masked images (i.e. for the image content); bandwidth for communication between the remote computing device and the client device; and computational load on the client device, as described elsewhere herein;
   - in this case, optionally the method further comprising: selecting, by the remote computing device, the MAE model from a plurality of a candidate MAE models, in dependence on one or more properties of the images; and transmitting, from the remote computing device to the client device, the selected MAE model for use in reconstructing the first images at the client device, as described elsewhere herein;
   - in this case, optionally generating the masked images comprises randomly selecting the one or more portions of the first images for masking (i.e. the masked portions are randomly distributed across the first images), as described elsewhere herein;
   - in this case, optionally generating the masked images comprises masking uniformly masking a proportion of elements of the first images (i.e. the masked portions are uniformly distributed across the first images, e.g. every 3 in 4 pixels are masked), as described elsewhere herein;
- the method further comprising displaying the one or more reconstructed first images to a user of the client device, as described elsewhere herein;
- receiving 230 the masked images comprises: receiving, at the client device, downsampled versions of the first images from the remote computing device; and upsampling the downsampled first images by adding new masked elements to the downsampled first images; and where reconstructing 240 the first images comprises reconstructing the first images from the upsampled first images using the MAE model, as described elsewhere herein;
- the one or more first images are images for a videogame; and wherein outputting 250 the reconstructed first images comprises outputting the reconstructed first images for display to a user of the videogame, as described elsewhere herein;
- the one or more images are a plurality of images for content, as described elsewhere herein; and
- for a given first image, the one or more masked portions comprise at least 50%, preferably at least 70%, more preferably at least 90%, of the first image, as described elsewhere herein.

Referring again to Figure 2, in another summary embodiment of the present invention an image streaming method for streaming image content (i.e. images) from a remote computing device 15 to a client device 10 comprises the following steps.

A step 210 of generating, at the remote computing device, the one or more masked images, as described elsewhere herein.

A step 220 of transmitting, from the remote computing device to the client device, the one or more masked images, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence referring back to Figure 1, an example conventional device may be the entertainment device 10. Accordingly, an image streaming system for streaming image content from a remote computing device 15 to a client device 10 may comprise the following.

A client device 10 comprising the following. An input processor (for example CPU 20) configured (for example by suitable software instruction) to receive, from the remote computing device, one or more masked images, each masked image comprising a first image with one or more portions of the first image being masked. An image reconstruction processor (for example CPU 20) configured (for example by suitable software instruction) to reconstruct the one or more first images from the one or more masked images using a Masked Auto Encoder, MAE, model, the MAE model being trained to reconstruct an image from a masked version of the image. And an output processor (for example CPU 20) configured (for example by suitable software instruction) to output the one or more reconstructed first images for display.

The image streaming system may further comprise the remote computing device 15. The remote computing device 15 may be configured (for example by suitable software instruction) to generate the one or more masked images
The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image streaming method for streaming image content from a remote computing device to a client device, the method comprising:
receiving, from the remote computing device, one or more masked images, each masked image comprising a first image with one or more portions of the first image being masked;
reconstructing, at the client device, the one or more first images from the one or more masked images using a Masked Auto Encoder, MAE, model, the MAE model being trained to reconstruct an image from a masked version of the image; and
outputting, at the client device, the one or more reconstructed first images for display.

2. The image streaming method of claim 1, wherein the one or more masked images comprise a plurality of masked image frames for content; wherein reconstructing the one or more first images from the one or more masked images comprises reconstructing a plurality of image frames from the masked image frames in real-time for display to a user.

3. The image streaming method of claim 1 or 2, wherein the MAE model comprises: an encoder configured to encode the one or more masked images into a latent space representation, and a decoder configured to decode the latent space of the one or more masked images to reconstruct the one or more first images.

4. The image streaming method of claim 3, wherein receiving the one or more masked images comprises receiving the latent space representation of the masked images; and
wherein reconstructing the one or more first images comprises decoding, using the MAE model decoder, the latent space representation of the one or more masked images to reconstruct the one or more first images.

5. The image streaming method of claim 3, wherein receiving the one or more masked images comprises receiving image data for the one or more masked images; and
wherein reconstructing the one or more first images comprises: encoding, using the MAE encoder, the image data for the one or more masked images into a latent space representation; and decoding, using the MAE model decoder, the latent space representation of the one or more masked images to reconstruct the one or more first images.

6. The image streaming method of any preceding claim, further comprising:
generating, at the remote computing device, the one or more masked images; and
transmitting, from the remote computing device to the client device, the one or more masked images.

7. The image streaming method of claim 6, wherein generating the one or more masked images comprises: generating the one or more first images, and processing the one or more first images to mask one or more portions of the first images.

8. The image streaming method of claim 6, wherein generating the one or more masked images comprises: selecting the one or more portions of the first images for masking, rendering the unmasked portions of the first images, and at least partly omitting rendering operations for the masked portions of the first images.

9. The image streaming method of any of claims 6 to 8, further comprising:
receiving one or more user inputs from a peripheral device operated by a user of the client device; and
generating, at the remote computing device, the one or more masked images based on the user inputs.

10. The image streaming method of any of claims 6 to 9, wherein generating the masked images comprises selecting the one or more portions of the first images for masking, wherein the one or more portions are selected in dependence on one or more of:
a gaze direction of a user of the client device; and
game context data, from a videogame engine, for portions of the first images.

11. The image streaming method of any of claims 6 to 10, wherein generating the masked images comprises determining a masking ratio for the first images in dependence on one or more of:
a frame rate for the masked images;
bandwidth for communication between the remote computing device and the client device; and
computational load on the client device.

12. The image streaming method of any of claims 6 to 11, further comprising:
selecting, by the remote computing device, the MAE model from a plurality of a candidate MAE models, in dependence on one or more properties of the images; and
transmitting, from the remote computing device to the client device, the selected MAE model for use in reconstructing the first images at the client device.

13. The image streaming method of any preceding claim, wherein receiving the masked images comprises:
receiving, at the client device, downsampled versions of the first images from the remote computing device; and
upsampling the downsampled first images by adding new masked elements to the downsampled first images;
and wherein reconstructing the first images comprises reconstructing the first images from the upsampled first images using the MAE model.

14. A computer program comprising computer executable instructions adapted to cause a computer system to perform the method of any one of the preceding claims.

15. An image streaming system for streaming image content from a remote computing device to a client device, the system comprising the client device, the client device comprising:
an input processor configured to receive, from the remote computing device, one or more masked images, each masked image comprising a first image with one or more portions of the first image being masked;
an image reconstruction processor configured to reconstruct the one or more first images from the one or more masked images using a Masked Auto Encoder, MAE, model, the MAE model being trained to reconstruct an image from a masked version of the image; and
an output processor configured to output the one or more reconstructed first images for display.
